# FASCICULE DE BREVET EUROPEEN

(11) **EP 1 546 039 B1**
(45) Date de publication et mention de la délivrance du brevet: **21.12.2011**
(21) Numéro de dépôt: 03773936.4
(22) Date de dépôt: 24.09.2003
(51) Int. Cl.: C01G 9/02, C01G 9/00, C09C 1/04

(54) **OXIDE DE ZINC SOUS FORME DE POUDRE A COULABILITE AMELIOREE, LEUR PROCEDE DE PREPARATION ET LEUR UTILISATION DANS LES POLYMERES**
PULVERFÖRMIGES ZINKOXID MIT VERBESSERTER FLIESSFÄHIGKEIT, HERSTELLUNGSVERFAHREN UND VERWENDUNG IN POLYMEREN
ZINC OXIDE IN THE FORM OF AN IMPROVED FLOW POWDER, METHOD FOR THE PRODUCTION AND USE THEREOF IN POLYMERS

(30) Priorité: 25.09.2002 BE 200200557
(43) Date de publication de la demande: 29.06.2005
(73) Titulaire: Societe Industrielle Liegeoise des Oxydes SA, 4480 Engis (BE)
(72) Inventeur: GUIDI, Tomizio, B-4100 Seraing (BE); POLART, Jules, B-7140 Morlanwelz (BE)
(74) Mandataire: Claeys, Pierre
(86) Numéro de dépôt international: PCT/IB2003/005612
(87) Numéro de publication internationale: WO 2004/028972

(56) Documents cités:
- EP-A- 1 172 334
- FR-A- 2 641 268
- US-A- 5 000 888
- PATENT ABSTRACTS OF JAPAN vol. 1998, no. 04, 31 mars 1998 (1998-03-31) & JP 09 309725 A (MITSUBISHI MATERIALS CORP), 2 décembre 1997 (1997-12-02)

## Description

La présente invention concerne des composés oxygénés du zinc sous forme de poudre à coulabilité améliorée, leur procédé de fabrication et leur utilisation dans les domaines des polymères, en particulier des élastomères.

On entend ici dans l'ensemble du texte ci-après, par composés oxygénés du zinc, les oxydes, hydroxydes, carbonates, ou hydroxycarbonates de zinc et leurs dérivés.

L'oxyde de zinc est utilisé dans des domaines très variés, tels que ceux des émaux, des varistances, des huiles, des peintures, des réactifs divers pour les polymères, aussi bien plastiques qu'élastomères, et même dans l'alimentation animale. Pour ces multiples applications, il se présente sous différentes formes, généralement sous l'aspect d'une poudre.

Dans le domaine spécifique des élastomères, l'oxyde de zinc est employé notamment en tant que catalyseur complexant de la réaction de vulcanisation, lors de la réticulation des élastomères, ou en tant que charge semi-renforçante :
- en tant que catalyseur de la réaction de réticulation (c'est-à-dire création d'un réseau pontal tridimensionnel grâce à un agent de vulcanisation, tel que le soufre), l'oxyde de zinc est combiné avec l'acide stéarique pour former un complexe activateur soluble dans la gomme, qui s'unit à l'agent de vulcanisation pour permettre la fixation des chaînes macromoléculaires de l'élastomère ; les mécanismes d'actions sont fugaces (complexes peu stables) et/ou mal définis dans le cas de variations de certains paramètres (type d'oxyde de zinc, surface spécifique, etc.) ;
- en tant que charges, au même titre que d'autres produits pulvérulents (noir de carbone, craie, kaolins, talc, etc.) il permet de conférer au produit des propriétés spécifiques (conductibilité, amélioration de la résilience, etc.).

Les paramètres physico-chimiques de l'oxyde de zinc permettent d'influer sur le comportement du produit dans la grande majorité des applications. Afin de quantifier les différences entre les divers oxydes de zinc les producteurs utilisent couramment des paramètres physico-chimiques qui permettent leur classification, notamment :
- la BET exprimée en m²/g de produit (indicative de la surface spécifique)
- les teneurs résiduelles en métaux lourds (indicatives de la pureté).

La valeur de surface spécifique BET mesurée correspond à la surface accessible du produit pour un composé chimique donné. Cette surface varie selon la nature (gaz ou liquide) du solvant utilisé pour la mesure et reste donc une valeur indicative. Il est généralement admis que les produits à BET élevée ont une activité chimique de surface améliorée (réactivité) mais une dispersion difficile. Il existe actuellement dans le commerce des oxydes de zinc dont la surface spécifique BET varie sur une large plage de valeurs, entre 0,5 m²/g et 100 m²/g environ.

La surface spécifique étant considérée comme une variable particulièrement influente dans la réactivité du ZnO, les fabricants utilisent différentes méthodes de synthèse qui permettent d'obtenir des oxydes de natures physiques différentes, en fonction de leur application ultérieure.

Un des procédés de fabrication est le procédé dit «humide» (wet process). Il comporte deux phases principales :
Phase 1 : la réaction de SO₂ sur du zinc métallique, en présence d'eau produit ZnS₂O₄ et est suivie d'une précipitation par un agent alcalin (NaOH) pour donner un précipité d'oxyde de zinc ou d'hydroxyde de zinc qui est ensuite filtré puis lavé.
   C'est lors de la réaction de précipitation qu'il est possible dans un premier temps de maîtriser la BET du produit (notamment en fonction de la vitesse de précipitation, la nature de l'agent alcalin, la concentration des produits, etc.). En effet, les conditions d'obtention du gâteau d'oxyde de zinc ou d'hydroxyde de zinc gouvernent la nature finale du produit (forme des particules, surface spécifique, etc.). Ces paramètres pourront être encore modifiés lors des traitements ultérieurs, mais l'essentiel des caractéristiques spécifiques classiques provient de cette première phase réactive complexe.
Phase 2 : dans cette phase, est effectuée la calcination de l'hydroxyde de zinc ou de l'oxyde de zinc, ou le séchage de l'oxyde issu du gâteau de filtration, oxyde qui est ensuite conditionné en sacs ou en trémies.

Le séchage peut-être effectué :
- soit dans des fours rotatifs où le produit est en contact direct avec la flamme ou avec les parois chaudes du four donnant lieu à des gros granules très durs, qui nécessitent d'être ensuite broyés avant utilisation. L'oxyde de zinc ainsi obtenu présente souvent une faible surface spécifique.
- soit en aspirant le gâteau de filtration dense et compact dans un courant d'air chaud, selon un procédé appelé «flash». Le produit obtenu est une poudre très fine, présentant parfois des agglomérats qui nécessitent un broyage avant dispersion.

Le choix du procédé de séchage, et de ses paramètres (températures, vitesse des fluides, type d'installation, etc.) permettent l'obtention de produits spécifiques.

Cependant ces techniques de séchage conduisent à des oxydes de zinc qui possèdent une coulabilité médiocre, présentant fréquemment des agglomérats ainsi qu'une prise en masse lors de leur stockage. Ces agglomérats sont en outré préjudiciables à une bonne incorporation desdits oxydes dans les élastomères, mais aussi lors de leur transport où ils colmatent fréquemment les canalisations.

On connaît aussi un procédé de fabrication d'oxyde de zinc, et de carbonate de zinc en poudre comportant un séchage par pulvérisation de la poudre dans un gaz chaud à l'aide d'un disque rotatif (voir FR-A-2641268), ce qui donne lieu à une poudre à particules extrêmement fines, présentant une coulabilité médiocre.

Les inventeurs ont découvert de manière surprenante, qu'en utilisant pour le séchage de composés oxygénés du zinc, et en particulier de l'oxyde de zinc un procédé d'atomisation, et en réglant avec précision certains paramètres de fonctionnement, on pouvait obtenir un composé oxygéné de zinc à coulabilité et dispersibilité améliorées, et à bonne réactivité, sans altérer sa surface spécifique.

La présente invention concerne donc un composé oxygéné du zinc sous forme de micro-sphérules caractérisé en ce qu'il présente un indice Flodex inférieur à 15, de préférence inférieur à 10, les microsphérules présentant un D50 (taille correspondant à 50 % de la courbe de répartition granulométri cumulée) compris entre 50 et 200 µm environ.

L'indice Flodex est un test permettant de mesurer la facilité d'écoulement des poudres. L'appareil utilisé est un récipient dans lequel on place la poudre à tester et dont la base consiste en un diaphragme d'ouverture calibrée au travers duquel on observe s'il y a écoulement de ladite poudre. Par essais successifs, on détermine le diamètre minimum par lequel cette poudre s'écoule librement. Ce diamètre (en millimètres) correspond à l'indice Flodex.

Un très faible indice (inférieur à 15, voire inférieur à 10) indique donc un produit de très haute coulabilité appelé ici «Free-Flowing». Les nombreux avantages qui en découlent sont notamment :
- un ensachage facilité ;
- une amélioration des conditions de dosage dans des systèmes semi-automatiques et automatiques, principalement en ce qui concerne la reproductibilité, les vitesses de dosage, la suppression des colmatages et des effets de mottage ;
- la suppression des stagnations de poudre dans les coudes de canalisation lors de transports pneumatiques par exemple ;
- la limitation de l'émission de fines lors des diverses manutentions (par exemple lors de dosages, de remplissages de réservoirs, etc.) ce qui réduit notablement les problèmes liés à la sécurité, à l'environnement, ainsi que les pertes de produit.

De manière préférée, la densité apparente des composés oxygénés du zinc en poudre selon l'invention est supérieure à 0,8 environ. En outre, ils présentent avantageusement un indice de compressibilité [(densité tassée - densité apparente) x 100 / densité tassée], inférieur à 20 % environ, de préférence inférieur à 15 % environ et avantageusement compris entre 10 et 12 % environ.

Le composé oxygéné du zinc en poudre peut ainsi être stocké sur une longue période (au moins un an) sans présenter d'agglomérats ni de phénomène de «mottage».

Les composés oxygénés du zinc sont de préférence choisis parmi un oxyde de zinc, un hydroxyde de zinc, un carbonate de zinc, un hydroxycarbonate de zinc ou un mélange de ceux-ci.

La présente invention concerne également un procédé de préparation du composé oxygéné de zinc précité, caractérisé en ce qu'il consiste à injecter au moyen d'une buse une suspension aqueuse dudit composé oxygéné du zinc, présentant une teneur en matières solides de 25 à 70 % en poids, sous une pression de 10 à 100 bars environ, à l'intérieur d'une chambre d'atomisation, dans un courant de gaz entrant à une température de 250 à 800° C environ et sortant à une température de 50 à 300° C environ.

La suspension aqueuse de composé oxygéné du zinc à 25-70 % en poids de matières solides, de préférence 35 à 60 % en poids est suffisamment fluide pour être pulvérisée (atomisée) par une buse.

De préférence, la teneur en matières solides est comprise entre 40 et 45 % en poids dans la suspension aqueuse.

La technique de séchage selon l'invention autorise l'apport de certains additifs dans la suspension et permet d'obtenir une homogénéisation parfaite au sein du produit. En particulier, si l'on souhaite augmenter la teneur en matières solides jusqu'à 45-70 % en poids, il peut être avantageux d'ajouter un agent dispersant, et stabilisant de ladite suspension, tel qu'un polyacrylate.

Le courant gazeux peut être de l'air, de l'azote ou tout gaz adéquat (issu d'un recyclage, par exemple d'un procédé de combustion). De préférence, le courant de gaz est un courant d'air.

En sortie de la chambre d'atomisation la température du gaz est avantageusement comprise entre 90 et 220° C, et de préférence entre 105 et 170° C environ.

Le temps de séjour dans la chambre d'atomisation ne dépasse pas 10 secondes, et est préférentiellement voisin de 4 à 5 secondes.

La surface spécifique BET du produit obtenu peut aller jusqu'à 150 m²/g, mais elle est avantageusement inférieure à 100 m²/g, et de préférence inférieure à 50 m²/g..

Le procédé selon l'invention, dit d'atomisation, est un processus de séchage qui permet de conserver l'intégralité des propriétés physico-chimiques (notamment la surface spécifique) de la particule depuis la réaction de précipitation, tout en modifiant la structure macroscopique du produit en favorisant la formation de micro-sphérules à répartition granulométrique étroite. En effet, il apparaît que les micro-sphérules présentent un D₅₀ (taille correspondant à 50 % de la courbe de répartition granulométrique cumulée) compris entre 50 et 200 µm environ, avantageusement entre 50 et 100 µm environ, et de préférence entre 70 et 90 µm environ.

Afin d'obtenir une répartition étroite de la granulométrie des particules, pour l'introduction de la suspension de composé oxygéné du zinc dans la chambre d'atomisation, une buse d'injection est préférable à un disque tournant.

En effet, pour obtenir des particules plus grosses, avec un disque tournant, il est nécessaire de réduire sa vitesse de rotation. Les gouttelettes projetées sont alors trop grosses pour être séchées avant d'atteindre les parois de la chambre et provoquent des dépôts sur ces dernières.

Dans la présente invention, en combinaison avec le réglage de la pression, le choix du diamètre de sortie du gicleur (par exemple entre 0,8 et 6 mm) permet de faire varier la taille des micro-sphérules souhaitées, entre 50 et 100 µm environ, toujours en les produisant suivant une répartition granulométrique étroite.

De manière avantageuse, la pression d'injection est comprise entre 15 et 80 bars environ. La buse utilisée est de préférence un gicleur à chambre de tourbillonnement.

Le composé oxygéné du zinc obtenu par le procédé selon l'invention ne présente plus de «mottage» et permet d'obtenir un écoulement de type «micro-billes» qui rend le produit très facilement véhiculable par les voies pneumatiques sans colmater les canalisations.

Ceci est un avantage important pour l'utilisation des composés oxygénés du zinc selon l'invention dans des mélangeurs industriels avec migration pneumatique des ingrédients pulvérulents, ainsi que pour leur utilisation dans des matrices de polymères, en évitant la formation d'agglomérats indivisibles lors de la phase de mélangeage.

Ces avantages ont pu être mis en évidence plus particulièrement lors de la vulcanisation des élastomères. Ainsi, ont été constatées une meilleure dispersion notamment de l'hydroxycarbonate de zinc et de l'oxyde de zinc dans les matrices de caoutchouc avec des temps de mélangeage réduits, et une meilleure reproductibilité (qui se traduit sur des paramètres tels que le taux de réticulation, la résistance à la rupture et à l'allongement), ainsi qu'un taux d'encrassement des moules nettement réduit, permettant d'utiliser ces produits sur une plus longue durée. En outre, après stockage, on a constaté l'absence d'efflorescences blanchâtres, fréquemment présentes à la surface du caoutchouc avec les oxydes de zinc de l'art antérieur.

Cette meilleure dispersion est due au fait que les micro-sphérules sont en réalité constituées de particules unitaires plus petites ayant un D₅₀ compris entre 1 et 20 µm environ, avantageusement entre 1 et 15 µm, sans liant.

Lors de l'incorporation du composé de zinc dans la matrice d'élastomère, ou de la mise en suspension dans un liquide (eau, par exemple), les micro-sphérules se désagrègent, donnant naissance à ces particules unitaires plus petites, mais possédant une surface spécifique BET inchangée.

Pour l'oxyde de zinc, ces particules unitaires présentent un D₅₀ plutôt compris entre 1 et 10 µm environ, de préférence entre 1 et 5 µm, ou même entre 1 et 3 µm environ. Pour l'hydroxycarbonate de zinc, les dimensions (D₅₀) de ces particules unitaires sont comprises approximativement entre 1 et 20 µm, de préférence entre 1 et 15 µm.

Un liant, tel qu'un polyol, pourrait néanmoins être ajouté au composé oxygéné du zinc, pour mieux lier les particules unitaires entre elles en formant la micro-sphérule. Cependant, un tel liant n'est pas nécessaire dans l'invention, et permet de ne pas «polluer» le matériau dans lequel seront incorporées les micro-sphérules (élastomères, ...).

Les composés oxygénés du zinc selon la présente invention, pouvant être produits par le procédé décrit ci-dessus, trouvent une utilisation intéressante lors de la réticulation de polymères, en particulier lors de la vulcanisation d'élastomère.

Ces composés peuvent aussi être utilisés en tant que pigments ou charges, par exemple dans les peintures, le verre, ou les céramiques.

La présente invention va être illustrée par des exemples non limitatifs, en référence aux figures annexées sur lesquelles :
- la Figure 1: est un schéma présentant le dispositif permettant la réalisation du procédé selon l'invention,
- les Figures 2a, 2b et 2c: montrent la répartition granulométrique de plusieurs types d'oxydes de zinc,
- la Figure 3: présente des courbes montrant la fréquence d'apparition des particules en fonction de leur section sur des coupes de matrices caoutchouc incorporant divers ZnO,
- la Figure 4: est un graphique présentant la résistance à l'allongement de pièces caoutchouc dans lesquelles ont été incorporés différents oxydes de zinc,
- la Figure 5: est un graphique présentant la résistance à la rupture de pièces caoutchouc dans lesquelles ont été incorporés différents oxydes de zinc,
- la Figure 6: est un graphique présentant le taux de réticulation et les pentes de réversion de matrices caoutchouc dans lesquelles ont été incorporés différents oxydes de zinc,
- la Figure 7: est un graphique montrant la vitesse d'encrassement de moules servant à la fabrication de pièces caoutchouc incorporant différents oxydes de zinc.

### Exemple 1 : Dispositif

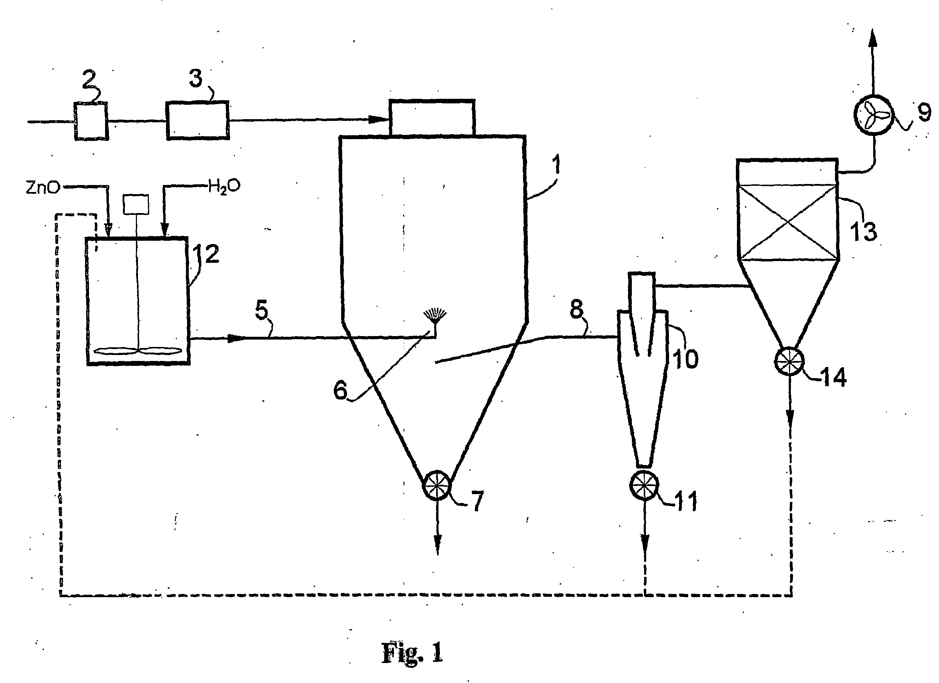

Un dispositif permettant de réaliser le procédé selon l'invention, présenté sur la Figure 1, comporte une chambre cylindrique d'atomisation 1 à fond conique dans laquelle circule un courant d'air chaud. L'air entrant traverse préalablement un filtre 2 et un brûleur 3 permettant son préchauffage, et pénètre, à une température de 550° C, dans la partie supérieure de la chambre d'atomisation 1 au travers d'un distributeur à ailettes 4. Le débit d'air pendant les essais était de l'ordre de 700 N m³/h.

L'alimentation en oxyde de zinc s'effectue par la canalisation 5 au moyen d'une pompe, sous la forme d'une suspension aqueuse renfermant de 40 à 45 % en poids de ZnO préparée dans un mélangeur-disperseur 12. Ladite suspension est introduite, à un débit d'environ 80-100 litres par heure et sous une pression de 20 à 30 bars, par l'intermédiaire d'une buse 6 disposée au centre de la chambre 1. Ladite suspension est pulvérisée (atomisée) et séchée en quelques secondes dans le courant d'air chaud.

Les particules de ZnO obtenues tombent dans la partie inférieure de la chambre où elles sont recueillies et évacuées par la vanne 7 pour être par exemple mises en sac immédiatement. On recueille à ce niveau entre 85 et 90 % de l'oxyde de Zinc FF (Free Flowing) sous la forme de sphérules de diamètre moyen compris entre 70 et 100 µm comportant moins de 0,5 % d'eau résiduelle. Les particules les plus fines sont évacuées dans l'air sortant de la chambre par la canalisation 8 sous l'action d'aspiration d'un ventilateur 9. Elles sont ensuite séparées de l'air sortant par exemple dans un cyclone 10 et récupérées par la vanne 11 pour être éventuellement recyclées au niveau de la préparation de la suspension dans le disperseur 12. Environ 10 à 15 % en poids de fines (poudre non agglomérée sous forme de sphérules) sont ainsi immédiatement séparées des sphérules d'oxyde de zinc constituant le ZnO FF de l'invention, et recyclées.

L'air est filtré au moyen d'un filtre à manche 13 avant de quitter le circuit. Les particules éventuellement récupérées à ce stade sont collectées au niveau de la vanne 14 et peut être également recyclées vers le disperseur 12 (suivant le trait pointillé).

La buse 6 utilisée peut être un gicleur de type possédant une chambre de tourbillonnement (type Delavan SDX) de diamètre de sortie 1,62 mm dans l'exemple présenté, ou une buse à deux fluides dans laquelle l'énergie est apportée par de l'air comprimé qui permet d'obtenir de très hauts degrés de pulvérisation et donc des poudres plus fines.

Le tableau 1 suivant présente les résultats d'analyse de deux séries d'oxyde de zinc séchés par le procédé d'atomisation selon l'invention au moyen du dispositif décrit ci-dessus.

Le ZnO n° 1 est un produit issu directement du gâteau de filtration du procédé de préparation dit «humide».

Le ZnO n° 2 est un oxyde de zinc obtenu par calcination.

Ces deux oxydes ont été mis en suspension dans l'eau (40-45 %) et ont été soumis au procédé selon l'invention dans un dispositif tel que celui présenté dans l'exemple 1.

**Tableau 1**

| | ZnO n° 1 | ZnO n° 2 |
|---|---|---|
| Surface BET (m²/g) | 38 | 7,2 |
| Prise d'huile | | |
| ml/100 g | 51,5 | 40,8 |
| Couple max. (mNm) | 360 | 180 |
| Coulabilité | | |
| Indice Flodex (mm) | 5 | 5 |
| Densité | | |
| apparente | 0,893 | 1,128 |
| tassée | 1,010 | 1,263 |
| Indice de compressibilité | 11,6 | 10,7 |
| Granulométrie | | |
| refus cumulés (%) 212 µm | 0,4 | 0,2 |
| 106 µm | 66,4 | 56,3 |
| 75 µm | 87,6 | 81,4 |
| 45 µm | 97,8 | 96,4 |
| 32 µm | 99,7 | 99,4 |
| Passant 32 µm | 0,3 | 0,6 |
| refus humide (%) 45 µm | < 0,1 | < 0,1 |
| Composition chimique | | |
| H₂O à 105°C (%) | 0,24 | 0,08 |
| ZnO (%) | 95,6 | 98,2 |
| S_{Total} (%) | 1,1 | 0,39 |
| S_{sulfure} (%) | 0,65 | 0,09 |
| S_{sulfate} (%) | 0,21 | 0,37 |
| Cu (ppm) | 3,3 | 3,0 |
| Mn (ppm) | 0,8 | 0,7 |
| Pb (ppm) | 15 | 16 |
| Cd (ppm) | < 0,5 | < 0,5 |

### Exemple 2 : Comparaison des caractéristiques physico-chimiques de plusieurs ZnO.

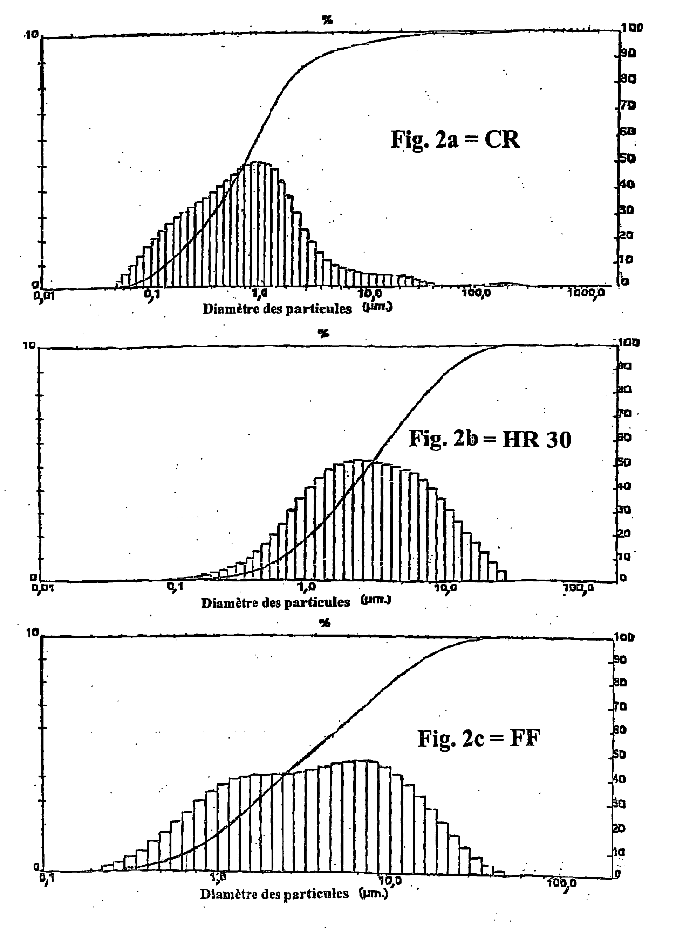

Le tableau 2 ci-après, associé aux Figures 2a à 2c, permet de comparer les caractéristiques physico-chimiques d'oxydes de zinc séchés par des procédés différents :
a. le procédé thermique classique ZnO CR
b. le procédé dit «spin flash» ZnO HR 30
c. le procédé d'atomisation selon l'invention ZnO FF (Free Flowing). d. un oxyde de zinc séché par un procédé «flash»

**Tableau 2**

| | a | b | d | c | |
|---|---|---|---|---|---|
| Exemples ZnO Procédé de séchage | ZnO CR thermique | ZnO HR30 Spin flash | ZnO flash | ZnO FF atomisation | |
| BET (m²/g) | 5 | 46 (20-50) | 43 | 47 (40-45) | |
| Prise d'huile (ml/100g) | 35 | 55 | 49 | 57 | |
| Indice Flodex (mm) | 36 | 34 | 30 | 9 | |
| D10 | 0,15 | 0,73 | 0,73 | 0,79** | 60,1* |
| D50 | 0,78 | 2,95 | 3,18 | 3,85** | 79,1* |
| D99 | 28,36 | 23,45 | 33,2 | 32,75** | 95,1* |

| | | | | | |
|---|---|---|---|---|---|
| * avant dispersion ** après dispersion 15 min (ici dans l'eau) | | | | | |

Les valeurs D représentent les tailles de particules (en µm) correspondant respectivement à 10, 50 et 99 % de la courbe de répartition cumulée, par mesure laser.

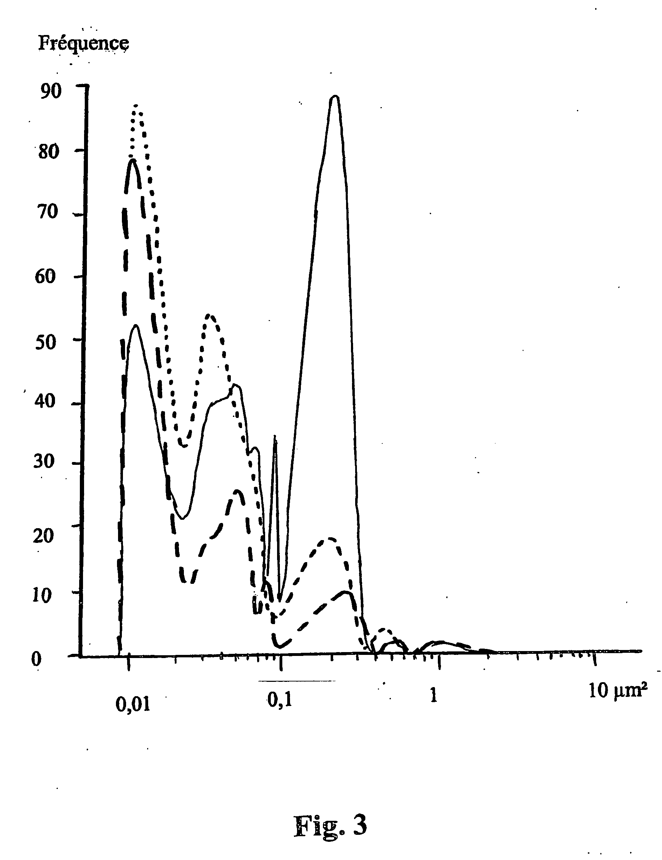

On retrouve après dispersion dans l'eau du ZnO FF (c) des tailles de particules qui sont comparables à celles des autres produits connus, sans devoir subir des opérations mécaniques telles que le broyage (cf. aussi le graphique de la Figure 3).

### Exemple 3 : Incorporation de divers ZnO dans des matrices caoutchouc solides

Sur un mélangeur à cylindres chauffé à 150°C (température de consigne), le polymère est d'abord réchauffé pendant 2 minutes, puis sont introduits simultanément l'oxyde de zinc et l'acide stéarique. Le mélangeage est poursuivi pendant 5 minutes, avant de presser le mélange dans une presse à plateaux durant deux minutes à 150° C. Des fines coupes (50 nanomètres) d'épaisseur sont préparées par ultramicrométrie à -130° C à l'aide d'un couteau en diamant, avant d'être déposées sur une grille en cuivre en vue de leur observation au microscope électronique à transmission (TEM). L'aire de la section des particules observables sur la coupe de l'échantillon a été mesurée.

Les constituants et quantités mis en oeuvre étaient les suivants :
- pour 100 parties en poids de polymère (caoutchouc solide) :
- 15 parties en poids de ZnO (CR, HR30 ou FF ayant les propriétés présentées dans le Tableau 2, le ZnO Aktiv Bayer présentant un indice Flodex > 36 et une surface spécifique BET de l'ordre de 45 m²/g)
- 3 parties en poids d'acide stéarique.

Pour cet essai, les proportions en ZnO et en acide stéarique ont été augmentées par rapport aux proportions classiques (5 parties de ZnO et 1,5 à 2 parties d'acide stéarique) de manière à pouvoir observer visuellement leur comportement dans la matrice caoutchouc.

La Figure 3 présente les comparaisons des résultats d'analyse des images pour ces trois oxydes : fréquence en fonction de l'aire en µm² de la section des particules observables sur la coupe. Ces courbes montrent principalement que le ZnO selon l'invention (ZnO FF séché par atomisation) présente, après incorporation dans la matrice caoutchouc, moins de grosses particules que le ZnO CR (séché par un procédé thermique classique) : on note en effet une diminution importante du pic autour de 0,02 µm². Les profils des courbes du ZnO FF et du ZnO HR30 sont similaires.

Néanmoins, dans le mélange élastomère, le nombre de petites particules est plus élevé pour le ZnO FF, ce qui signifie que la réaction page 1 ligne 14 des produits entre eux est plus complète et qu'en conséquence les taux de ZnO habituellement utilisés peuvent être diminués très sensiblement (c'est-à-dire être réduits de 5 % à 2,5 %, voire même jusqu'à 1,5 % en poids).

### Exemple 4 : Mesures des résistances à la rupture et à l'allongement.

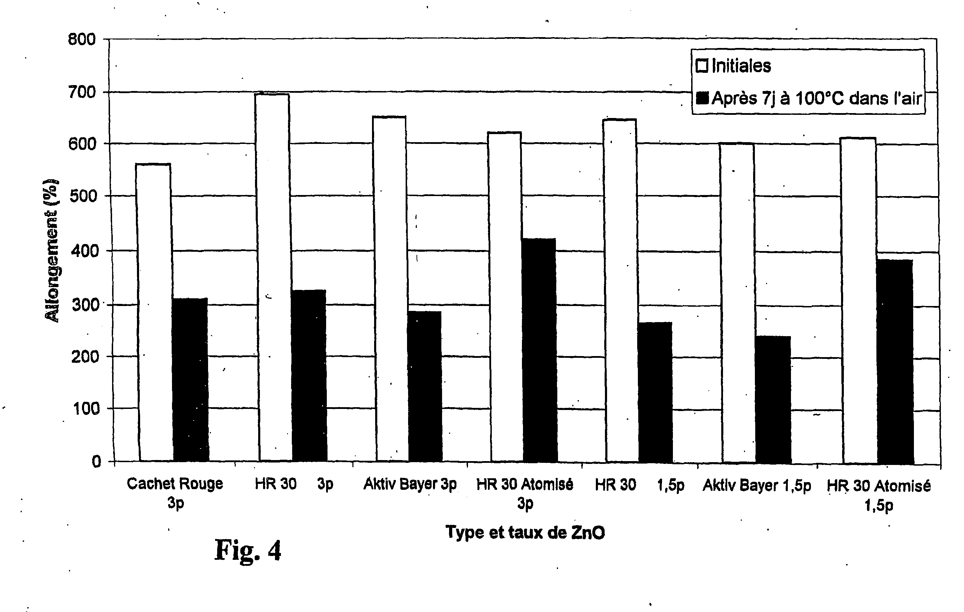

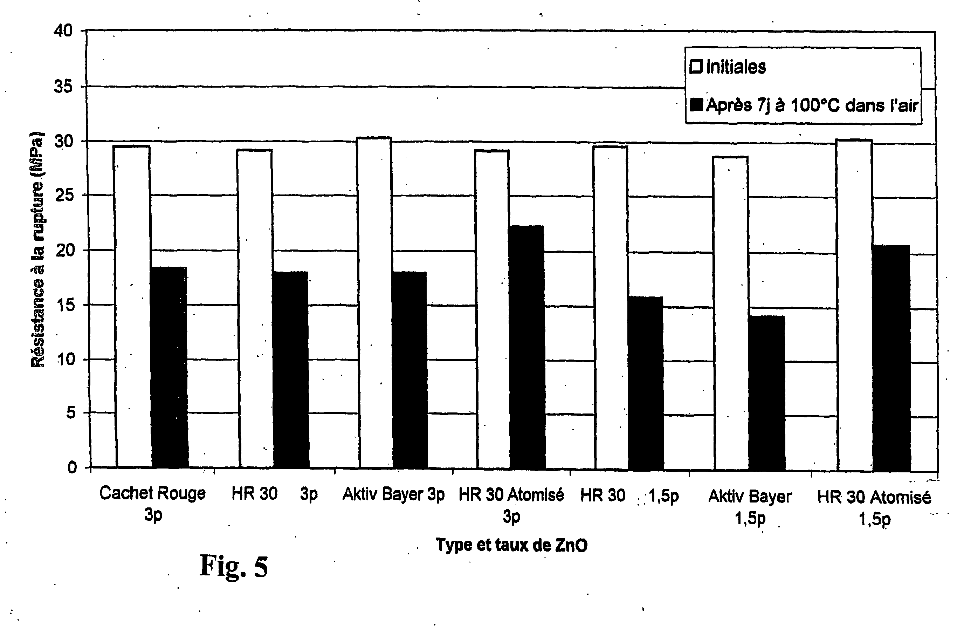

Les tests de résistances à la rupture et à l'allongement ont été effectués selon les normes ISO 37 = NF T46.002 = ASTM D 412 sur les échantillons préparés selon le protocole de l'exemple 3 ci-dessus avec des caoutchouc NR (Natural Rubber, caoutchouc naturel). Les quantités des différents oxydes de zinc introduits dans les matrices étaient de 3 parties (3p) en poids ou de 1,5 parties (1,5 p) en poids. Les propriétés mécaniques (résistance rupture, allongement ...) ont été mesurées avant et après exposition à l'air pendant 7 jours à 100° C. Les résultats sont présentés sur les Figures 4 et 5.

Ces résultats montrent de meilleures tenues au veillissement des caoutchoucs renfermant 3p et 1,5 p de ZnO FF selon l'invention.

Des essais similaires avec des matrices en EPDM (Ethylene Propylene Diene Monomer) ont présenté des améliorations plus importantes.

### Exemple 5 : Taux de réticulation et pente de réversion.

Sur les échantillons de l'exemple 4 ont été mesurés les taux de réticulation (créations de «ponts» entre les chaînes de polymères) graphiquement sur les courbes rhéométriques des mélanges (courbes de réticulation) à 170 °C sur un rhéomètre à rotor oscillant (Type R 100). Il s'agit de la différence entre le couple maxi (point haut de la courbe) et le couple mini (point bas de la courbe). Il est exprimé en «points».

En ce qui concerne la pente de réversion, on mesure graphiquement la décroissance de la courbe (en points) 6 minutes à partir du couple maxi. On teste ainsi la densité pontale résiduelle après 6 minutes à la température de vulcanisation.

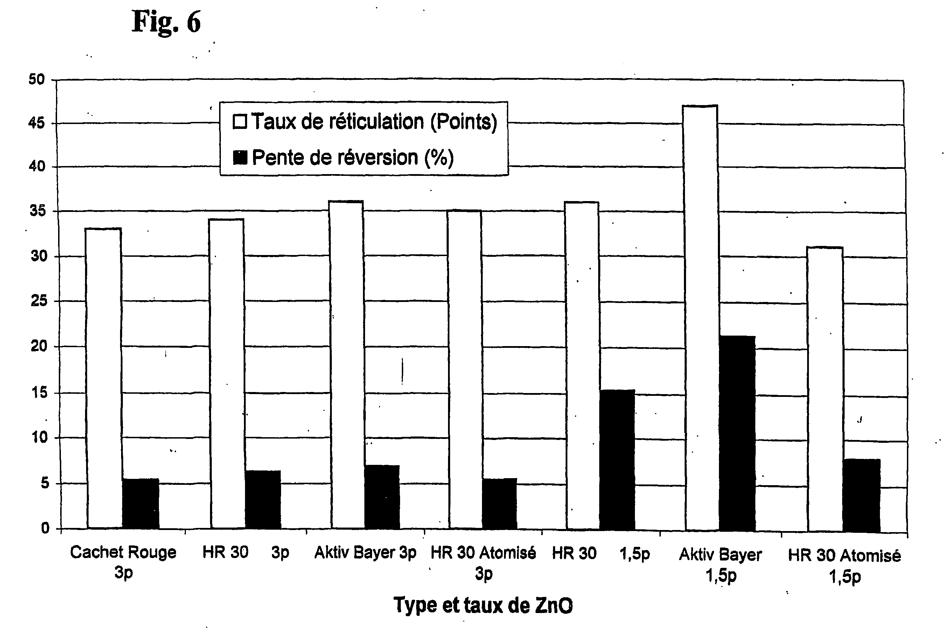

Il est apparu qu'avec le ZnO FF selon l'invention, (cf. Figure 6), la réversion est nettement diminuée, ce qui permet d'éviter l'utilisation de produits additionnels à action anti-réversante. L'énergie d'activation des ponts créés avec le ZnO FF est donc supérieure à celle des autres types d'oxydes de zinc.

### Exemple 6 : Aptitude au moulage- limitation de l'encrassement

Les essais réalisés sur l'utilisation industrielle du ZnO Free Flowing ont permis de mettre en évidence une amélioration de l'injectabilité des mélanges, couplée à une limitation importante de l'encrassement des outillages.

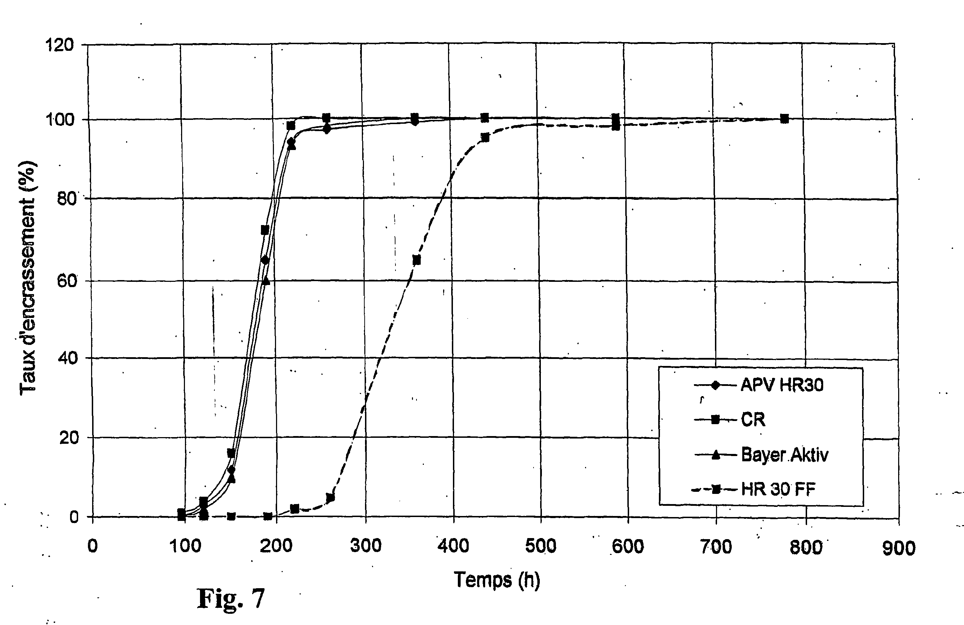

La formulation est réalisée à partir de caoutchouc naturel et d'EPDM (proportions de 70/30) pour une pièce de clapet de chasse d'eau. On observe les empreintes du moule (24 E ici à 24 Empreintes) et on quantifie la surface matifiée (salie) sur chacune des empreintes. Le pourcentage exprimé sur le graphique de la Figure 7 correspond au pourcentage de la surface totale des 24 pièces contaminée en fonction du temps ; 100 % indique que 100 % de la surface des pièces est mate, et le moule totalement encrassé.

On remarque sur la Figure 7 que le temps d'utilisation des moules peut être doublé en utilisant l'oxyde de zinc selon l'invention, par rapport aux autres oxydes de zinc testés (HR30, CR, Bayer Aktiv).

## Revendications

1. Composé oxygéné du zinc sous forme de micro-sphérules constituées de particules unitaires plus petites et présentant un indice Flodex inférieur à 15, les microsphérules présentant un D50 (taille correspondant à 50 % de la courbe de répartition granulométrique cumulée) compris entre 50 et 200 µm.

2. Composé oxygéné du zinc selon la revendication 1, **caractérisé en ce qu'**il présente un indice Flodex inférieur à 10.

3. Composé oxygéné du zinc selon la revendication 1 ou 2, **caractérisé en ce qu'**il présente un indice de compressibilité [(densité tassée - densité apparente) x 100 / densité tassée] inférieur à 20 %.

4. Composé oxygéné du zinc selon la revendication 3, **caractérisé en ce qu'**il présente un indice de compressibilité inférieur à 15 %.

5. Composé oxygéné du zinc selon l'une quelconque des revendications précédentes, **caractérisé en ce qu'**il présente une surface spécifique B.E.T. inférieure à 100 m²/g.

6. Composé oxygéné du zinc selon la revendication 5, **caractérisé en ce qu'**il présente une surface spécifique B.E.T. inférieure à 50 m²/g.

7. Composé oxygéné du zinc selon l'une quelconque des revendications précédentes, **caractérisé en ce que** les micro-sphérules présentent un D₅₀ compris entre 50 et 100 µm.

8. Composé oxygéné du zinc selon la revendication 7, **caractérisé en ce que** les micro-sphérules présentent un D₅₀ compris entre 70 et 90 µm environ.

9. Composé oxygéné du zinc selon l'une quelconque des revendications précédentes, **caractérisé en ce que** les micro-sphérules sont constituées de particules unitaires plus petites ayant un D₅₀ compris entre 1 et 15 µm environ, sans liant.

10. Composé oxygéné du zinc selon l'une quelconque des revendications précédentes, **caractérisé en ce qu'**il est choisi parmi un oxyde de zinc, un hydroxyde de zinc, un carbonate de zinc, un hydroxycarbonate de zinc ou un mélange de ceux-ci.

11. Procédé de préparation de composé oxygéné du zinc selon l'une quelconque des revendications précédentes, **caractérisé en ce qu'**il consiste à injecter au moyen d'une buse (6) une suspension aqueuse dudit composé oxygéné du zinc, présentant une teneur en matières solides de 25 à 70 % en poids, sous une pression de 10 à 100 bars environ, à l'intérieur d'une chambre d'atomisation (1), dans un courant de gaz entrant à une température de 250 à 800° C environ et sortant à une température de 50 à 300° C environ.

12. Procédé selon la revendication 11, **caractérisé en ce que** la teneur en matières solides est comprise entre 40 et 45% en poids dans la suspension aqueuse.

13. Procédé selon la revendication 11, **caractérisé en ce que** la suspension aqueuse présente une teneur en matières solides comprise entre 45 et 70 % en poids, et **en ce qu'**on ajoute à ladite suspension un agent dispersant, tel qu'un polyacrylate.

14. Procédé selon l'une quelconque des revendications 11 à 13, **caractérisé en ce que** la pression d'injection est comprise entre 15 et 80 bars environ.

15. Procédé selon l'une quelconque des revendications 11 à 14, **caractérisé en ce que** la température du gaz en sortie de la chambre d'atomisation (1) est comprise entre 90 et 220° C environ.

16. Procédé selon la revendication 15, **caractérisé en ce que** la température du gaz en sortie de la chambre d'atomisation (1) est comprise entre 105 et 170° C environ.

17. Procédé selon l'une quelconque des revendications 11 à 16, **caractérisé en ce que** le gaz est de l'air.

18. Utilisation de composé oxygéné du zinc selon l'une quelconque des revendications 1 à 10, ou produit selon l'une quelconque des revendications 11 à 17 lors de la réticulation de polymères.

19. Utilisation selon la revendication 18, lors de la vulcanisation d'élastomère.

20. Utilisation de composé oxygéné du zinc selon l'une quelconque des revendications 1 à 10, ou produit selon l'une quelconque des revendications 11 à 17 en tant que pigment ou charge, dans les peintures, le verre ou les céramiques.

## Claims

1. An oxygenated zinc compound in the form of microspherules consisting of smaller particle units and having a Flodex index of less than 15, the microspherules having a D₅₀ (a size corresponding to 50% of the accumulated grain size distribution curve) comprised between 50 and 200 µm.

2. The oxygenated zinc compound according to claim 1, **characterized in that** it has a Flodex index of less than 10.

3. The oxygenated zinc compound according to claim 1 or 2, **characterized in that** it has a compressibility index [(packed density - apparent density) x 100/packed density] of less than 20%.

4. The oxygenated zinc compound according to claim 3, **characterized in that** it has a compressibility index of less than 15%.

5. The oxygenated zinc compound according to any of the preceding claims, **characterized in that** it has a BET specific surface area of less than 100 m²/g.

6. The oxygenated zinc compound according to claim 5, **characterized in that** it has a BET specific surface area of less than 50m²/g.

7. The oxygenated zinc compound according to any of the preceding claims, **characterized in that** the microspherules have a D₅₀ comprised between 50 and 100 µm.

8. The oxygenated zinc compound according to claim 7, **characterized in that** the microspherules have a D₅₀ comprised between about 70 and 90 µm.

9. The oxygenated zinc compound according to any of the preceding claims, **characterized in that** the microspherules consist of smaller particle units having a D₅₀ comprised between about 1 and 15 µm, without any binder.

10. The oxygenated zinc compound according to any of the preceding claims, **characterized in that** it is selected from a zinc oxide, a zinc hydroxide, a zinc carbonate, a zinc, a zinc hydroxycarbonate, or a mixture thereof.

11. A method for preparing an oxygenated zinc compound according to any of the preceding claims, **characterized in that** it consists of injecting by means of a nozzle (6) an aqueous suspension of said oxygenated zinc compound, having a solid material content from 25 to 70% by weight, under a pressure of about 10 to 100 bars, inside an atomization chamber (1) in a gas stream flowing in at a temperature from 250 to 800°C and flowing out at a temperature from about 50 to 300°C.

12. The method according to claim 11, **characterized in that** the solid material content is comprised between 40 and 45% by weight in the aqueous suspension.

13. The method according to claim 11, **characterized in that** the aqueous suspension has a solid material content comprised between 45 and 70% by weight, and **in that** a dispersant agent such as a polyacrylate is added to said suspension.

14. The method according to any of claims 11 to 13, **characterized in that** the injection pressure is comprised between about 15 and 80 bars.

15. The method according to any of claims 11 to 14, **characterized in that** the temperature of the gas at the outlet of the atomization chamber (1) is comprised between about 90 and 220°C.

16. The method according to claim 15, **characterized in that** the temperature of the gas at the outlet of the atomization chamber (1) is comprised between about 105 and 170°C.

17. The method according to any of claims 11 to 16, **characterized in that** the gas is air.

18. The use of the oxygenated zinc compound according to any of claims 1 to 10, or produced according to any of claims 11 to 17, during crosslinking of polymers.

19. The use according to claim 18, during elastomer vulcanization.

20. The use of the oxygenated zinc compound according to any of claims 1 to 10, or produced according to any of claims 11 to 17, as a pigment or filler, in paints, glass or ceramics.

## Patentansprüche

1. Sauerstoffhaltige Zinkverbindung in Form von Mikrokügelchen, die aus kleineren Einzelpartikeln bestehen und einen Flodex-Index von weniger als 15 aufweisen, wobei die Mikrokügelchen einen D₅₀-Wert (Größe, die 50 % der kumulierten Korngrößenverteilungskurve entspricht) im Bereich von 50 bis 200 µm aufweisen.

2. Sauerstoffhaltige Zinkverbindung nach Anspruch 1, **dadurch gekennzeichnet, dass** sie einen Flodex-Index von weniger als 10 aufweist.

3. Sauerstoffhaltige Zinkverbindung nach Anspruch 1 oder 2, **dadurch gekennzeichnet, dass** sie einen Kompressibilitätsindex [(Stampfdichte - scheinbare Dichte) x 100] von weniger als 20 % aufweist.

4. Sauerstoffhaltige Zinkverbindung nach Anspruch 3, **dadurch gekennzeichnet, dass** sie einen Kompressibilitätsindex von weniger als 15 % aufweist.

5. Sauerstoffhaltige Zinkverbindung nach einem beliebigen der vorhergehenden Ansprüche, **dadurch gekennzeichnet, dass** sie eine spezifische Oberfläche BET von weniger als 100 m²/g aufweist.

6. Sauerstoffhaltige Zinkverbindung nach Anspruch 5, **dadurch gekennzeichnet, dass** sie eine spezifische Oberfläche BET von weniger als 50 m²/g aufweist.

7. Sauerstoffhaltige Zinkverbindung nach einem beliebigen der vorhergehenden Ansprüche, dadurch gekenntzeichnet, dass die Mikrokügelchen einen D₅₀-Wert im Bereich von 50 bis 100 µm aufweisen.

8. Sauerstoffhaltige Zinkverbindung nach Anspruch 7, **dadurch gekennzeichnet, dass** die Mikrokügelchen einen D₅₀-Wert im Bereich von ungefähr 70 bis 90 µm aufweisen.

9. Sauerstoffhaltige Zinkverbindung nach einem beliebigen der vorhergehenden Ansprüche, **dadurch gekennzeichnet, dass** die Mikrokügelchen aus kleineren Einzelpartikeln bestehen, die einen D₅₀-Wert im Bereich von ungefähr 1 bis 15 µm haben, ohne Bindemittel.

10. Sauerstoffhaltige Zinkverbindung nach einem beliebigen der vorhergehenden Ansprüche, **dadurch gekennzeichnet, dass** sie aus einem Zinkoxid, einem Zinkhydroxyd, einem Zinkcarbonat, einem Zinkhydroxycarbonat oder einer Mischung derselben ausgewählt ist.

11. Verfahren zur Herstellung einer sauerstoffhaltigen Zinkverbindung nach einem beliebigen der vorhergehenden Ansprüche, **dadurch gekennzeichnet, dass** es darin besteht, mittels einer Düse (6) eine wässrige Suspension der sauerstoffhaltigen Zinkverbindung, die einen Trockenmassegehalt von 25 bis 70 Gewichts-% aufweist, unter einem Druck von ungefähr 10 bis 100 bar im Inneren einer Zerstäubungskammer (1) in einen Gasstrom einzuspritzen, der bei einer Temperatur von ungefähr 250 bis 800 °C eintritt und bei einer Temperatur von ungefähr 50 bis 300 °C austritt.

12. Verfahren nach Anspruch 11, **dadurch gekennzeichnet, dass** der Trockenmassegehalt in der wässrigen Suspension im Bereich von 40 bis 45 Gewichts-% liegt.

13. Verfahren nach Anspruch 11, **dadurch gekennzeichnet, dass** die wässrige Suspension einen Trockenmassegehalt im Bereich von 45 bis 70 Gewichts-% aufweist und dass der Suspension ein Dispergiermittel wie etwa ein Polyacrylat zugesetzt wird.

14. Verfahren nach einem beliebigen der Ansprüche 11 bis 13, **dadurch gekennzeichnet, dass** der Einspritzdruck im Bereich von ungefähr 15 bis 80 bar liegt.

15. Verfahren nach einem beliebigen der Ansprüche 11 bis 14, **dadurch gekennzeichnet, dass** die Temperatur des Gases an der Austrittsöffnung der Zerstäubungskammer (1) im Bereich von ungefähr 90 bis 220 °C liegt.

16. Verfahren nach Anspruch 15, **dadurch gekennzeichnet, dass** die Temperatur des Gases an der Austrittsöffnung der Zerstäubungskammer (1) im Bereich von ungefähr 105 bis 170 °C liegt.

17. Verfahren nach einem beliebigen der Ansprüche 11 bis 16, **dadurch gekennzeichnet, dass** es sich bei dem Gas um Luft handelt.

18. Verwendung der sauerstoffhaltigen Zinkverbindung nach einem beliebigen der Ansprüche 1 bis 10, oder die nach einem beliebigen der Ansprüche 11 bis 17 hergestellt wurde, bei der Vernetzung von Polymeren.

19. Verwendung nach Anspruch 18, bei der Elastomervulkanisation.

20. Verwendung der sauerstoffhaltigen Zinkverbindung nach einem beliebigen der Ansprüche 1 bis 10, oder die nach einem beliebigen der Ansprüche 11 bis 17 hergestellt wurde, als Pigment oder Füllstoff in Anstrichmitteln, in Glas oder in keramischen Stoffen.
